# EUROPEAN PATENT SPECIFICATION

(11) **EP 3 083 762 B1**
(45) Date of publication and mention of the grant of the patent: **28.08.2019**
(21) Application number: 14867252.0
(22) Date of filing: 06.12.2014
(51) Int. Cl.: C08G 75/14, C08G 65/32, C08G 65/48, C08G 18/83, C09K 3/10, C08G 18/75, C08G 18/73, C08G 18/50, C08G 18/32

(54) **POLYSULFIDE AND POLYFLUOROETHER COPOLYMER COMPOSITIONS**
POLYSULFID- UND POLYFLUORETHERCOPOLYMERZUSAMMENSETZUNGEN
COMPOSITIONS DE COPOLYMÈRES DE POLYSULFURE ET DE POLYFLUOROÉTHER

(30) Priority: 06.12.2013 US 201361913057 P; 05.12.2014 US 201414561238
(43) Date of publication of application: 26.10.2016
(73) Proprietor: HRL Laboratories, LLC, Malibu, CA 90265-4799 (US)
(72) Inventor: NOWAK, Andrew, Los Angeles, California 90025 (US)
(74) Representative: Miller, James Lionel Woolverton
(86) International application number: PCT/US2014/068957
(87) International publication number: WO 2015/085277

(56) References cited:
- WO-A2-2015/102699
- CN-B- 101 157 750
- JP-A- 2013 057 019
- US-B1- 7 361 728
- US-B1- 8 334 356
- QUAN, YIWU ET AL.: 'Structure and oil-resistant properties of HTPB-based polyurea modified with polysulfide.' JOURNAL OF APPLIED POLYMER SCIENCE vol. 89, no. 10, 01 January 2003, pages 2672 - 2675, XP055347724 DOI: 10.1002/APP.12381
- QUAN, YIWU ET AL.: 'Modification of polysulfide sealant with polysulfide polythio-urethane-urea.' JOURNAL OF APPLIED POLYMER SCIENCE vol. 106, no. 4, 01 January 2007, pages 2599 - 2604, XP055347728 DOI: 10.1002/APP.26792

## Description

### FIELD OF THE INVENTION

The present invention generally relates to segmented copolymers.

### BACKGROUND OF THE INVENTION

An elastomer is a polymer with viscoelasticity, having both viscosity and elasticity. Elastomeric materials are useful in a broad variety of applications, including use in low-temperature environments. However, many known elastomers do not maintain their advantageous elastic properties at low temperatures because such elastomers stiffen and become brittle below their glass-transition temperatures (*T_{g}*). In addition, known polymers such as polysiloxanes that are able to maintain flexibility at low temperatures can have reduced mechanical strength at low temperatures.

Elastomeric materials that possess a high degree of toughness through both high elongation and tensile strength find application in a variety of environments. For example, in aerospace applications, low temperatures (less than - 50°C) are common. There is a need for materials that can maintain classic elastic properties and demonstrate high degrees of toughness in these demanding environments. Many known elastomeric materials can undergo an abrupt increase in modulus as temperature is lowered. This is due to the polymeric components that make up these materials possessing glass-transition temperatures above the environmental temperature.

It is desirable for elastomeric materials to be in a form that can be conveniently prepared and applied in the field. This can require precursor components that are capable of being stored and stable over acceptable time periods. Once activated, the elastomeric materials may demonstrate an acceptable pot life or be suspended in a medium that allows for convenient application.

Elastomeric materials and systems typically have chains with high flexibility and low intermolecular interactions and either physical or chemical crosslinks to prevent flow of chains past one another when a material is stressed. For an elastomeric material or system to demonstrate good elastic behavior at low temperatures, it is desirable that it include elements that have low glass-transition temperatures.

One known method to produce a physically crosslinked elastomer is the use of segmented polyurethane systems. These species demonstrate strong hydrogen bonding potential between them and as a result can create strong associative forces between the chains. In order to produce elastomeric materials, regions of highly flexible and weakly interacting chains must be incorporated with strongly associating elements. This can be accomplished using a segmented copolymerization scheme. Segmented copolymers provide a synthetic route toward block architectures using segments with differing properties. Segmented copolymers possess alternating hard and soft segments composed of regions of high urethane bond density and the chosen soft segment component(s), respectively. This covalent linkage of dissimilar hard and soft blocks drives the systems to microphase separation and creates regions of flexible soft blocks surrounding regions of hard blocks. The associative forces among the hard segments prevent flow under stress and can produce elastomeric materials capable of displaying high elongation and tensile strength.

In general, known elastomer-based sealants, coatings, and gap fillers can lack robust durability, especially under environmental extremes such as low temperatures, (e.g., -50°C).

Polysulfides are a class of polymers defined by two or more consecutive sulfur atoms in the backbone, with alternating chains of several sulfur atoms and hydrocarbons (such as aliphatic or aromatic groups). Polysulfides are valued for their chemical resistance, particularly in the area of fuels. As a result, an important application for polysulfides is sealants for integral fuel tanks on aircraft.

Oligomeric polysulfide precursors produced commercially are terminated with thiol end groups. Such materials are typically compounded with fillers, plasticizers, adhesion promoters, and rheology modifiers to tailor properties to a given application. Curing of commercial polysulfide systems is most commonly accomplished with inorganic oxides and peroxides (Bertozzi, "Chemistry and Technology of Elastomeric Polysulfide Polymers," Rubber Chemistry and Technology 41 (1968) 114-160). Aerospace fuel tank sealants are dominated by pure polysulfide networks cured with inorganic oxides.

Due to the chemical reactivity of the end-terminated thiol group, it is possible to modify it to give greater flexibility for chain extension and crosslinking. Such alternative end groups include isocyanates, epoxides, hydroxyls, and unsaturated groups including vinyl, acrylate, and methacrylate. Strategies for incorporating the functional groups are known in the art; see for example Chattopadhyay and Raju, "Structural engineering of polyurethane coatings for high performance applications," Progress in Polymer Science 32 (2007) 352-418. One particularly versatile route is that of synthesis of polysulfide-urethane hybrids. These materials incorporate the toughening properties of polyurethanes with the ability to include a variety of reactive end groups. See Lee, "Properties and Applications of Elastomeric Polysulfides," Rapra Review Reports Vol. 9 No. 10 (1999).

Commercially cured polysulfide systems most commonly comprise networks formed of liquid polysulfide precursors based on poly(ethyl formal disulfide). These materials have the benefit of a low glass-transition temperature (about -60°C) and limited tendency toward crystallization, to help achieve low-temperature mechanical flexibility. Such flexibility is useful for applications such as aircraft integral fuel tanks where low temperatures at high altitude can cause stiffening, cracking, and delamination of the sealant coating. As a result, there is a need for lower-temperature flexible materials that maintain the fluid resistance of traditional polysulfide sealants.

Current commercial polysulfide networks, however, suffer from several drawbacks. Polysulfides are known for their resistance to hydrocarbons (e.g., jet fuel) and other non-polar liquids, but improved fluid resistance is desired. Current systems suffer from a tendency to delaminate from surfaces upon temperature cycling and aging. This is likely due to a lack of adhesive groups in the pure polysulfide networks, creating weak adhesive forces with the underlying substrate. Pure polysulfide networks maintain flexibility at temperatures well below 0°C. However, the operational temperature range experienced in aircraft traveling between ground and cruising altitude promotes stiffening that can lead to delamination and cracking. While polysulfides possess glass-transition temperatures between approximately - 40°C to -70°C, even lower glass-transition temperatures would allow for improved low-temperature flexibility. Finally, current polysulfide networks are largely limited to the use of inorganic oxides to promote oxidation of the polysulfide precursors and form a crosslinked network.

There have been reports of compositions incorporating polysulfide segments into polyurethane backbones. For example, in Quan et al., "Modification of Polysulfide Sealant with Polysulfide Polythio-urethane-urea," Journal of Applied Polymer Science 2007, 106, 2599-2604, urethane-polysulfide polymers are incorporated into traditional polysulfide resins with a beneficial effect on the mechanical properties.

Improved copolymer compositions are desired. In view of the aforementioned technical limitations, improved fluid resistance, substrate adhesion, and low-temperature flexibility are needed in the art for sealants and other applications.

### SUMMARY OF THE INVENTION

The present invention addresses the aforementioned needs in the art, as will now be summarized and then further described in detail below.

The invention provides a segmented copolymer composition comprising one or more polyurethane and/or polyurea hard segments, one or more polysulfide soft segments, one or more polyfluoroether soft segments, isocyanate species or derivatives thereof contained in each of the segments, and one or more curatives, characterised in that the weight ratio of the polysulfide soft segments to the polyfluoroether soft segments is from about 0.1 to about 10.

In some embodiments, the polysulfide soft segments and the polyfluoroether soft segments are collectively present in a concentration from about 50 wt% to about 95 wt% of the composition.

The polysulfide soft segments may comprise a polymer selected from the group consisting of poly(ethylene disulfide), poly(ethylene tetrasulfide), poly(ether ether disulfide), poly(ether ether tetrasulfide), poly(ethyl formal disulfide), poly(pentamethylene disulfide), poly(hexamethylene disulfide), poly(butyl formal disulfide), poly(butyl ether disulfide), and combinations thereof.

In some embodiments, the polysulfide soft segments have an average molecular weight from about 500 to about 10000. The polysulfide soft segments may be α-terminated and/or ω-terminated with sulfur, a sulfur-containing group, a hydroxyl group, or an aliphatic hydroxyl group, for example.

In certain embodiments, the polysulfide soft segments comprise a polymer characterized by 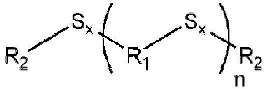 wherein x = 1 to 8, R₁ is an aliphatic group or aliphatic ether group, R₂ = H or an aliphatic hydroxyl group, and n = 1 to 60.

In some embodiments, the polyfluoroether soft segments comprise a polymer selected from perfluoropolyether, fluorinated polyethers, or a combination thereof. In certain embodiments, the polyfluoroether soft segments consist essentially of perfluoropolyether.

In some embodiments, the polyfluoroether soft segments have an average molecular weight from about 500 to about 5000. The polyfluoroether soft segments may be α-terminated and/or ω-terminated with a hydroxyl group or an aliphatic hydroxyl group, for example.

In some embodiments of the invention, the polyfluoroether soft segments are characterized by a glass-transition temperature of about -85° C. or lower, such as about -90° C, about -95° C, or about -100° C.

The isocyanate species or derivatives thereof may be selected from the group consisting of toluene diisocyanate, hexamethylene diisocyanate, methylenebis(cyclohexyl isocyanate), methylenebis(phenyl isocyanate), isophorone diisocycanate, derivatives thereof, and combinations of any of the foregoing.

The curatives may be selected from the group consisting of multifunctional alcohols, multifunctional amines, metal oxides, and combinations thereof. When the curatives include metal oxides, the metal oxides may be selected from PbO, MnO₂, ZnO, or combinations thereof.

Other variations of the invention provide a prepolymer composition comprising one or more polysulfide soft segments, one or more polyfluoroether soft segments, isocyanate species or derivatives thereof contained in each of the segments, and one or more chain-end groups, characterised in that the weight ratio of the polysulfide soft segments to the polyfluoroether soft segments is from about 0.1 to about 10.

In some embodiments, the polysulfide soft segments and the polyfluoroether soft segments are collectively present in a concentration from about 50 wt% to about 95 wt% of the composition.

The polysulfide soft segments may comprise a polymer selected from the group consisting of poly(ethylene disulfide), poly(ethylene tetrasulfide), poly(ether ether disulfide), poly(ether ether tetrasulfide), poly(ethyl formal disulfide), poly(pentamethylene disulfide), poly(hexamethylene disulfide), poly(butyl formal disulfide), poly(butyl ether disulfide), and combinations thereof.

In some embodiments of the prepolymer compositions, the polysulfide soft segments have an average molecular weight from about 500 to about 10000. The polysulfide soft segments may be α-terminated and/or ω-terminated with sulfur, a sulfur-containing group, a hydroxyl group, or an aliphatic hydroxyl group, for example.

In certain embodiments of the prepolymer compositions, the polysulfide soft segments comprise a polymer characterized by 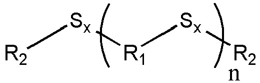 wherein x = 1 to 8, R₁ is an aliphatic group or aliphatic ether group, R₂ = H or an aliphatic hydroxyl group, and n = 1 to 60.

In some embodiments of the prepolymer compositions, the polyfluoroether soft segments comprise a polymer selected from perfluoropolyether, fluorinated polyethers, or a combination thereof. In certain embodiments, the polyfluoroether soft segments consist essentially of perfluoropolyether.

In some prepolymer compositions, the polyfluoroether soft segments have an average molecular weight from about 500 to about 5000. The polyfluoroether soft segments may be α-terminated and/or ω-terminated with a hydroxyl group or an aliphatic hydroxyl group, for example.

In some embodiments of the prepolymer compositions, the polyfluoroether soft segments are characterized by a glass-transition temperature of about -85°C or lower, such as about -90°C, about -95°C, or about -100°C.

The isocyanate species or derivatives thereof may be selected from the group consisting of toluene diisocyanate, hexamethylene diisocyanate, methylenebis(cyclohexyl isocyanate), methylenebis(phenyl isocyanate), isophorone diisocycanate, derivatives thereof, and combinations of any of the foregoing.

In the prepolymer composition, the chain-end groups may be selected from the group consisting of isocyanate groups, thiol groups, alcohol groups, epoxy groups, ethylenically unsaturated groups, acrylate groups, methacrylate groups, and combinations thereof.

The invention provides a segmented copolymer composition comprising one or more polyurethane and/or polyurea hard segments, one or more polysulfide soft segments, one or more polyfluoroether soft segments, isocyanate species or derivatives thereof contained in each of the segments, and one or more curatives, wherein the polyurethane segmented copolymer composition is obtained from a prepolymer composition comprising one or more polysulfide soft segments, one or more polyfluoroether soft segments, isocyanate species or derivatives thereof contained in each of the segments, and one or more chain-end groups, characterised in that the weight ratio of the polysulfide soft segments to the polyfluoroether soft segments is from about 0.1 to about 10.

### DETAILED DESCRIPTION OF EMBODIMENTS OF THE INVENTION

The compositions, formulations, methods, apparatus, and systems of the present invention will be described in detail by reference to various non-limiting embodiments.

This description will enable one skilled in the art to make and use the invention, and it describes several embodiments, adaptations, variations, alternatives, and uses of the invention. These and other embodiments, features, and advantages of the present invention will become more apparent to those skilled in the art when taken with reference to the following detailed description of the invention.

As used in this specification and the appended claims, the singular forms "a," "an," and "the" include plural referents unless the context clearly indicates otherwise. Unless defined otherwise, all technical and scientific terms used herein have the same meaning as is commonly understood by one of ordinary skill in the art to which this invention belongs.

Unless otherwise indicated, all numbers expressing conditions, concentrations, dimensions, and so forth used in the specification and claims are to be understood as being modified in all instances by the term "about." Accordingly, unless indicated to the contrary, the numerical parameters set forth in the following specification and attached claims are approximations that may vary depending at least upon a specific analytical technique.

The term "comprising," which is synonymous with "including," "containing," or "characterized by" is inclusive or open-ended and does not exclude additional, unrecited elements or method steps. "Comprising" is a term of art used in claim language which means that the named claim elements are essential, but other claim elements may be added and still form a construct within the scope of the claim.

As used herein, the phase "consisting of" excludes any element, step, or ingredient not specified in the claim. When the phrase "consists of" (or variations thereof) appears in a clause of the body of a claim, rather than immediately following the preamble, it limits only the element set forth in that clause; other elements are not excluded from the claim as a whole. As used herein, the phase "consisting essentially of' limits the scope of a claim to the specified elements or method steps, plus those that do not materially affect the basis and novel characteristic(s) of the claimed subject matter.

With respect to the terms "comprising," "consisting of," and "consisting essentially of," where one of these three terms is used herein, the presently disclosed and claimed subject matter may include the use of either of the other two terms. Thus in some embodiments not otherwise explicitly recited, any instance of "comprising" may be replaced by "consisting of' or, alternatively, by "consisting essentially of."

Some variations of the invention provide novel polymer compositions with polysulfide fluorinated ether blocks. The polymer backbone includes a hybrid polyurethane structure containing both polysulfide segments and polyfluoroether segments.

In order to achieve greater low-temperature flexibility over traditional polysulfide sealants while maintaining excellent fuel resistance, additional chain backbone components may be introduced with a lower glass-transition temperature, no tendency to crystallize, and inherent resistance to fuel exposure. Polyfluoroethers are a class of materials able to meet these requirements. Incorporation of these units into the chain can be accomplished through copolymerization with polysulfide materials using isocyanates to create a polyurethane prepolymer, which may then cured by chain extension.

The benefits of such copolymers of polysulfide and polyfluoroether are (1) better fluid resistance, (2) improved substrate adhesion, (3) low-temperature flexibility, and (4) modified cure kinetics (modified reaction mechanisms).

### (1) Fluid Resistance

The addition of a heavily fluorinated component will act to improve fluid resistance further over the current state-of-art commercial systems. Due at least in part to strong fluorine-carbon bonds, fluorinated components (such as polyfluoroethers) will provide enhanced water, oil, and stain resistance.

### (2) Improved Substrate Adhesion

Current systems suffer from a tendency to delaminate from surfaces upon temperature cycling and aging. This is likely due to a lack of adhesive groups in the pure polysulfide networks, creating weak adhesive forces with the underlying substrate. The urethane linkages in the compositions disclosed herein promote improved physical bonding with substrates, without the necessity of a primer layer.

### (3) Low-Temperature Flexibility

The addition of polyfluoroethers (e.g., perfluoropolyethers) incorporates an element with a low glass-transition temperature of (*T_{g}* ≈ -100°C), allowing for improved low-temperature flexibility.

### (4) Modified Cure Mechanisms

Incorporation of a polyurethane backbone allows for the flexibility to modify chain end groups to a variety of functional forms (e.g. epoxy, vinyl, thiol, isocyanate, etc.) that can be reacted with curatives.

In some exemplary embodiments, α,ω-thiol-terminated or α,ω-hydroxyl-terminated polysulfide is combined with a multifunctional isocyanate and the reaction driven to completion with heat and a suitable catalyst.
Subsequently, α,ω-hydroxyl-terminated poly(perfluoroether) is added to the mixture and the additional reaction driven to completion with continued heating. A prepolymer is formed from this process.

Once the prepolymer is formed, it will possess end groups based on which component was in stoichiometric excess during synthesis (thiol, isocyanate, or alcohol). The final step involves the addition of one or more curatives to convert the prepolymer resin into a solid network.

In this description, "polyurethane" is a polymer comprising a chain of organic units joined by carbamate (urethane) links, where "urethane" refers to N(H)-(C=O)-O-. Polyurethanes are generally produced by reacting an isocyanate containing two or more isocyanate groups per molecule with one or more polyols containing on average two or more hydroxyl groups per molecule, in the presence of a catalyst.

"Polyurea" is a polymer comprising a chain of organic units joined by urea links, where "urea" refers to N(H)-(C=O)-N(H)-. Polyureas are generally produced by reacting an isocyanate containing two or more isocyanate groups per molecule with one or more multifunctional amines (e.g., diamines) containing on average two or more amine groups per molecule, in the presence of a catalyst.

"Polysulfide" refers to a class of polymers with alternating chains of several (two or more) sulfur atoms and hydrocarbons.

"Polyfluoroether" refers to a class of polymers that contain an ether group-an oxygen atom connected to two alkyl or aryl groups, where at least one hydrogen atom is replaced by a fluorine atom in an alkyl or aryl group.

"Isocyanate" is the functional group with the formula -N=C=O. For the purposes of this disclosure, S-C(=O)-N(H)-R is considered a derivative of isocyanate.

Polyols are polymers in their own right and have on average two or more hydroxyl groups per molecule. For example, α,ω-hydroxyl-terminated polysulfide and α,ω-hydroxyl-terminated polyfluoroether are each a type of polyol.

Some variations of the invention provide a prepolymer composition comprising one or more polysulfide soft segments, one or more polyfluoroether soft segments, isocyanate species or derivatives thereof contained in each of the segments, and one or more chain-end groups.

In some embodiments, the polysulfide soft segments and the polyfluoroether soft segments are collectively present in a concentration from about 50 wt% to about 95 wt% of the composition. For example, the polysulfide and polyfluoroether may together be present in a concentration of about 50, 55, 60, 65, 70, 75, 80, 85, 90, or 95 wt% of the prepolymer composition.

Within the soft-segments portion of the overall prepolymer, the ratio of polysulfide to polyfluoroether may vary widely. For example, the weight ratio of the polysulfide soft segments to the polyfluoroether soft segments may be from about 0.1 to about 10, such as about 0.2, 0.5, 1, 2, 3, 4, 5, 6, 7, 8, 9, or 10. In principle, the soft-segments portion of the overall prepolymer may include mostly polysulfide (such as a polysulfide/polyfluoroether ratio of about 20, 50, 100 or more) or mostly polyfluoroether (such as a polysulfide/polyfluoroether ratio of about 0.05, 0.02, 0.01 or less); however, such embodiments would not tend to produce a cured polymer that can realize the above-described benefits introduced by the presence of both polysulfides and polyfluoroethers.

The polysulfide soft segments may comprise a polymer selected from the group consisting of poly(ethylene disulfide), poly(ethylene tetrasulfide), poly(ether ether disulfide), poly(ether ether tetrasulfide), poly(ethyl formal disulfide), poly(pentamethylene disulfide), poly(hexamethylene disulfide), poly(butyl formal disulfide), poly(butyl ether disulfide), and combinations thereof.

In some embodiments of the prepolymer compositions, the polysulfide soft segments have an average molecular weight from about 500 to about 10000, such as about 1000, 2000, 3000, 4000, 5000, 6000, 7000, 8000, or 9000. In some embodiments, the polysulfide soft segments have an average molecular weight higher than 10000. The polysulfide soft segments may be α-terminated and/or ω-terminated with sulfur, a sulfur-containing group, a hydroxyl group, or an aliphatic hydroxyl group, for example. The α-termination may be the same or different than the ω-termination.

In certain embodiments of the prepolymer compositions, the polysulfide soft segments comprise a polymer characterized by 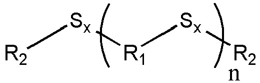 wherein x = 1 to 8, R₁ is an aliphatic group or aliphatic ether group, R₂ = H or an aliphatic hydroxyl group, and n = 1 to 60.

In some embodiments of the prepolymer compositions, the polyfluoroether soft segments comprise a polymer selected from perfluoropolyether, fluorinated polyethers, or a combination thereof. In certain embodiments, the polyfluoroether soft segments consist essentially of perfluoropolyether.

In some prepolymer compositions, the polyfluoroether soft segments have an average molecular weight from about 500 to about 5000, such as about 750, 1000, 2000, 3000, 4000, or 4500. The polyfluoroether soft segments may be α-terminated and/or ω-terminated with a hydroxyl group or an aliphatic hydroxyl group, for example. The α-termination may be the same or different than the ω-termination.

In some embodiments of the prepolymer compositions, the polyfluoroether soft segments are characterized by a glass-transition temperature *T_{g}* of about -75°C or lower, such as about -80°C, about -85°C, about -90°C, about -95°C, or about -100°C. In some embodiments, the polyfluoroether soft segments are characterized by *T_{g}* < -100°C.

The isocyanate species or derivatives thereof may be selected from the group consisting of toluene diisocyanate, hexamethylene diisocyanate, methylenebis(cyclohexyl isocyanate), methylenebis(phenyl isocyanate), isophorone diisocycanate, derivatives thereof, and combinations of any of the foregoing. A derivative of isocyanate species may be a reaction product of isocyanate, which for example converts the carbon-nitrogen double bond (in isocyanate, -N=C=O) to a carbon-nitrogen single bond and/or adds a hydrogen atom to the nitrogen atom. A derivative of isocyanate species may include, or be chemically bonded to, a sulfur atom.

In the prepolymer composition, the chain-end groups may be selected from the group consisting of isocyanate groups, thiol groups, alcohol groups, epoxy groups, ethylenically unsaturated groups, acrylate groups, methacrylate groups, and combinations thereof.

In some variations, the invention provides a segmented copolymer composition comprising one or more polyurethane and/or polyurea hard segments, one or more polysulfide soft segments, one or more polyfluoroether soft segments, isocyanate species or derivatives thereof contained in each of the segments, and one or more curatives.

A "curative" is a compound (or mixture of compounds) that link long molecules together and thereby complete a polymer reaction. Curatives are also known as curing agents, chain extenders, or hardeners. In polyurethane/urea systems, a curative is typically comprised of hydroxyl-terminated or amine-terminated compounds which react with isocyanate groups present in the mixture. Diols as curatives form urethane linkages, while diamines as curatives form urea linkages.

In some variations, the invention provides a segmented copolymer composition containing one or more polysulfide soft segments, one or more polyfluoroether soft segments, isocyanate species or derivatives thereof contained in each of said polysulfide soft segments and said polyfluoroether soft segments, and one or more curatives. Such copolymer composition typically will further contain one or more hard segments, such as polyurethane or polyurea segments created from the reaction of isocyanates with diol or diamines respectively. The hard segments will typically be free of sulfur or fluorine, i.e. the sulfur and fluorine in the copolymer composition will be present in the soft segments, as described herein.

In some embodiments, the polysulfide soft segments and the polyfluoroether soft segments are collectively present in a concentration from about 50 wt% to about 95 wt% of the composition. For example, the polysulfide and polyfluoroether may together be present in a concentration of about 50, 55, 60, 65, 70, 75, 80, 85, 90, or 95 wt% of the polyurethane segmented copolymer composition.

Within the soft-segments portion of the overall polymer, the ratio of polysulfide to polyfluoroether may vary widely. For example, the weight ratio of the polysulfide soft segments to the polyfluoroether soft segments may be from about 0.1 to about 10, such as about 0.2, 0.5, 1, 2, 3, 4, 5, 6, 7, 8, 9, or 10. In principle, the soft-segments portion of the overall polymer may include mostly polysulfide (such as a polysulfide/polyfluoroether ratio of about 20, 50, 100 or more) or mostly polyfluoroether (such as a polysulfide/polyfluoroether ratio of about 0.05, 0.02, 0.01 or less); however, such embodiments would not tend to realize the above-described benefits that are introduced by the presence of both polysulfides and polyfluoroethers, in preferred segmented copolymer compositions.

The polysulfide soft segments may comprise a polymer selected from the group consisting of poly(ethylene disulfide), poly(ethylene tetrasulfide), poly(ether ether disulfide), poly(ether ether tetrasulfide), poly(ethyl formal disulfide), poly(pentamethylene disulfide), poly(hexamethylene disulfide), poly(butyl formal disulfide), poly(butyl ether disulfide), and combinations thereof. Synthesis of such polysulfides is well-known.

In some embodiments, the polysulfide soft segments have an average molecular weight from about 500 to about 10000, such as about 1000, 2000, 3000, 4000, 5000, 6000, 7000, 8000, or 9000. In some embodiments, the polysulfide soft segments have an average molecular weight higher than 10000. The polysulfide soft segments may be α-terminated and/or ω-terminated with sulfur, a sulfur-containing group, a hydroxyl group, or an aliphatic hydroxyl group, for example. The α-termination may be the same or different than the ω-termination.

In certain embodiments, the polysulfide soft segments comprise a polymer characterized by 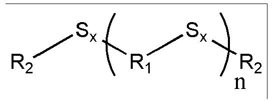 wherein x = 1 to 8, R₁ is an aliphatic group or aliphatic ether group, R₂ = H or an aliphatic hydroxyl group, and n = 1 to 60.

In some embodiments, the polyfluoroether soft segments comprise a polymer selected from perfluoropolyether, fluorinated polyethers, or a combination thereof. In certain embodiments, the polyfluoroether soft segments consist essentially of perfluoropolyether. Perfluoropolyether is a fluorocarbon polymer of polyhexafluoropropylene oxide, with a chemical formula -(CF(CF₃)-CF₂-O)ₙ-, wherein n = 6 to 60 and all H atoms have been replaced by F atoms. In some embodiments, partially fluorinated polyethers are provided, where a portion (such as about one-fourth, about one-third, about one-half, about two-thirds, or about three-fourths) of the H atoms have been replaced by F atoms. Synthesis of fluorinated polyethers is well-known. Fluorinated polyethers may also be derived from tetrafluoroethylene by ether formation chemistry.

In some embodiments, the polyfluoroether soft segments have an average molecular weight from about 500 to about 5000, such as about 750, 1000, 2000, 3000, 4000, or 4500. The polyfluoroether soft segments may be α-terminated and/or ω-terminated with a hydroxyl group or an aliphatic hydroxyl group, for example. The α-termination may be the same or different than the ω-termination.

In some segmented copolymers, the polyfluoroether soft segments are characterized by a glass-transition temperature *T_{g}* of about -75°C or lower, such as about -80°C, about -85°C, about -90°C, about -95°C, or about -100°C. In some embodiments, the polyfluoroether soft segments are characterized by *T_{g}* < -100°C.

The isocyanate species or derivatives thereof may be selected from the group consisting of toluene diisocyanate, hexamethylene diisocyanate, methylenebis(cyclohexyl isocyanate), methylenebis(phenyl isocyanate), isophorone diisocycanate, derivatives thereof, and combinations of any of the foregoing. In some embodiments, one or more diisocyanate species are selected from 4,4'-methylenebis(cyclohexyl isocyanate), cycloalkyl based diisocyanates, tolylene-2,4-diisocyante, 4,4'-methylenebis(phenyl isocyanate), and/or isophorone diisocyanate.

A derivative of isocyanate species may be a reaction product of isocyanate, which for example converts the carbon-nitrogen double bond (in isocyanate, -N=C=O) to a carbon-nitrogen single bond and/or adds a hydrogen atom to the nitrogen atom. A derivative of isocyanate species may include, or be chemically bonded to, a sulfur atom.

The choice of curative (also known as chain extender) may be determined by end groups present on a given prepolymer. In the case of isocyanate end groups, curing can be accomplished through chain extension using multifunctional amines or alcohols, for example. Terminal thiol groups may be cured through oxidation via an inorganic oxide, while acrylates, methacrylates and ethylenically unsaturated groups may be cured via radical or metal-catalyzed addition reactions. The curatives may be selected from the group consisting of multifunctional alcohols, multifunctional amines, metal oxides, and combinations thereof. When the curatives include metal oxides, the metal oxides may be selected from PbO, MnO₂, ZnO, or combinations thereof.

In some embodiments, curatives may include one or more low-molecular-weight diol or diamine chain extenders such as linear diamines, cycloalkyl diamines, cycloaliphatic diamines, aromatic diamines, 1,2-diaminocyclohexane, 1,3-diaminocyclohexane, 1,4-diaminocyclohexane, diethyltoluenediamine, or a mixture of two or more thereof.

The one or more curatives (or reaction products thereof) may be present in a concentration, in the polyurethane segmented copolymer composition, from about 0.01 wt% to about 10 wt%, such as about 0.05 wt% to about 1 wt%.

Some variations provide a segmented copolymer composition comprising one or more polyurethane and/or polyurea hard segments, one or more polysulfide soft segments, one or more polyfluoroether soft segments, isocyanate species or derivatives thereof contained in each of the segments, and one or more curatives, wherein the polyurethane segmented copolymer composition is obtained from a prepolymer composition comprising one or more polysulfide soft segments, one or more polyfluoroether soft segments, isocyanate species or derivatives thereof contained in each of the segments, and one or more chain-end groups.

In some embodiments, a first reaction product is combined with one or more diol or diamine curatives, together in a solvent to form a segmented copolymer. The diol or diamine chain extenders may be selected from linear diamines, cycloalkyl diamines, cycloaliphatic diamines, aromatic diamines, 1,2-diaminocyclohexane, 1,3-diaminocyclohexane, 1,4-diaminocyclohexane, diethyltoluenediamine, or a mixture of two or more thereof. The components may be added at a ratio such that the equivalents of diisocyanate species are stoichiometrically less than, equal to, or greater than the total alcohol and amine species in the composition. The solvent may be an alcohol such as isopropanol, tert-butanol, or 2-butanol, or a furan such as tetrahydrofuran (THF).

The method may further comprise a step of removing the solvent. In some embodiments, the solvent is not removed and the segmented copolymer remains in solution for subsequent use. The segmented copolymer may be applied to a surface at a later time. In some embodiments, the segmented copolymer may be applied to surfaces via spray coating directly from solution. In some embodiments, the first reaction product and the curative(s) are prepared separately and are stored prior to the addition of a solvent and combination to form the final product.

The segmented copolymer composition provided herein may have segments in various arrangements and sequences. In some embodiments, the segmented copolymer is a block copolymer. "Block copolymer" refers to a copolymer containing a linear arrangement of blocks, where each block is defined as a portion of a polymer molecule in which the monomeric units have at least one constitutional or configurational feature absent from the adjacent portions.

Some compositions herein comprise an "AB block copolymer," which is a block copolymer having moieties A and B arranged according to the general formula -[Aₘ-Bₙ]ₓ-, where each of m, n, and x is a positive integer, and m and n are each at least 2. Some compositions herein comprise an "ABC block copolymer" which is a block copolymer having moieties A, B, and C arranged according to the general formula -[Aₘ-Bₙ-Cₚ]ₓ-, where each of m, n, p, and x is a positive integer, and m, n, and p are each at least 2. Some compositions herein comprise a "random copolymer" which is a copolymer consisting of macromolecules in which the probability of finding a given monomeric unit at any given site in the chain is independent of the nature of the adjacent units.

In certain embodiments, the segmented copolymer composition consists essentially of, or comprises, the following molecular structure: 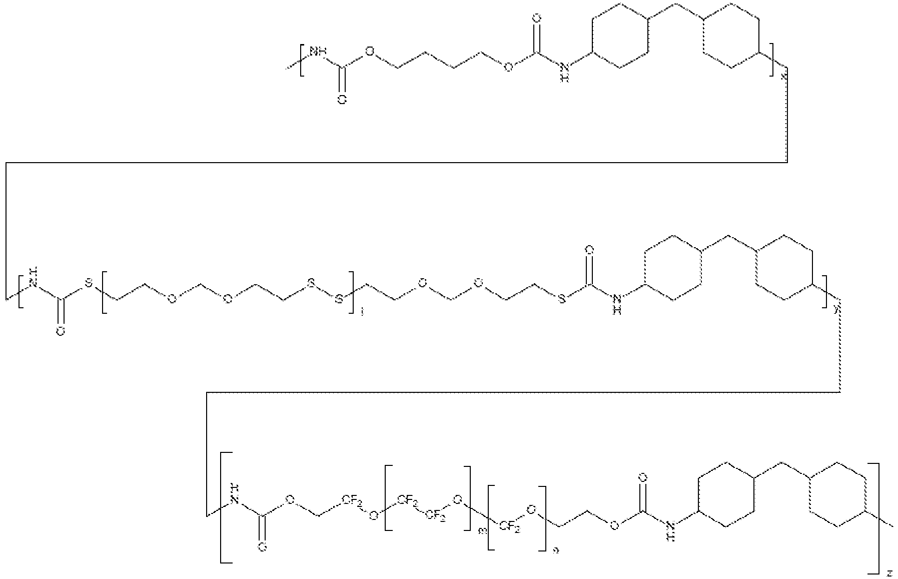 wherein:
m + n = 6 to 60 and m/n = 0.4 to 0.8;
1 = 6 to 60; and
x, y, and z = 1 or more (such as 1 to 20).

In this structure, the values x, y, and z are independent and will be set by the compositional ratios of the different soft segments and hard segments. For example when the polysulfide soft segments and polyfluoroether soft segments are collectively present in a concentration from about 50 wt% to about 95 wt% of said composition, then (y + z)/(x + y + z) = 0.5 to 0.95. When the weight ratio of polysulfide soft segments to polyfluoroether soft segments is from about 0.1 to about 10, then y/z = 0.1 to 10. As one example to illustrate, when x = 1, y/z = 1 and (y + z)/(x + y + z) = 0.75, then solving for y gives y = 1.5. Also z = 1.5, since y/z = 1. The relative values x/y = 0.667 and x/z = 0.667 can also be calculated; relative values may be more meaningful than absolute values of x, y, or z.

Various additives may be included in the copolymer compositions herein. Additives may include, but are by no means limited to, slip additives, fillers, pigments, stabilizers, and flame retardants.

### EXAMPLE

LP-32 polysulfide (approximately 4000 g/mol) is obtained from SPI Chem and is a product of Toray. Fluorolink D4000 hydroxy-terminated perfluoropolyether is received from Solvay Solexis. 4,4'-methylenebis(cyclohexyl isocyanate) (HMDI), triethylamine, and dibutyltin dilaurate (DBTDL) are received from Sigma Aldrich. Butanediol is a product of Spectrum Chemicals. All reagents are used as received.

LP-32 (2 g, 0.5 mmoles) and HMDI (1.05 g, 4.0 mmole) are charged to a vial and stirred with a polytetrafluoroethylene-coated stir bar and heated to 100°C. Next, triethylamine (10 mg) is added and the mixture is left to stir for 1 hour. Following this time, Fluorolink D4000 (2.0 g, 1.1 mL, 0.5 mmole) and DBTDL catalyst (10 mg) is injected via syringe and the mixture is agitated on a mechanical mixer briefly before being reintroduced to the 100°C heat bath for 1 hour. This procedure produces a white, highly viscous emulsion. Following this time, THF (1 mL) is added to the mixture while hot and promptly dispersed with a mechanical shaker. The mixture is allowed to cool to ambient temperature. Butanediol (270 mg, 3 mmole) in THF (1 mL) is dispersed into the mixture which is cast in a 3" × 3" polytetrafluoroethylene tray and left overnight, followed by a 2-hr exposure at 80°C to complete curing. The final molecular structure is as depicted in the above specification.

Practical applications for the present invention include, but are not limited to, elastomers in low-temperature environments. Compositions described herein are useful in automotive and aerospace areas, such as for fuel tank sealants in the aerospace industry. Other applications include sealants for valves and gaskets in cryogenic separation (e.g. cryogenic distillation); valves, compressors, and pumps stored and operated in arctic environments; refrigeration/freezing applications in food processing; and sealants in superconductors and supercooling electromagnets.

In this detailed description, reference has been made to multiple embodiments. These embodiments are described in sufficient detail to enable those skilled in the art to practice the invention, and it is to be understood that modifications to the various disclosed embodiments may be made by a skilled artisan.

Where methods and steps described above indicate certain events occurring in certain order, those of ordinary skill in the art will recognize that the ordering of certain steps may be modified and that such modifications are in accordance with the variations of the invention. Additionally, certain steps may be performed concurrently in a parallel process when possible, as well as performed sequentially.
All publications, patents, and patent applications cited in this specification are herein incorporated by reference in their entirety as if each publication, patent, or patent application were specifically and individually put forth herein.

The embodiments and variations described above should provide an indication of the utility and versatility of the present invention. Other embodiments that do not provide all of the features and advantages set forth herein may also be utilized, without departing from the spirit and scope of the present invention. Such modifications and variations are considered to be within the scope of the invention defined by the claims.

## Claims

1. A segmented copolymer composition comprising one or more polyurethane and/or polyurea hard segments, one or more polysulfide soft segments, one or more polyfluoroether soft segments, isocyanate species or derivatives thereof contained in each of said segments, and one or more curatives, **characterised in that**:
the weight ratio of said one or more polysulfide soft segments to said one or more polyfluoroether soft segments is from 0.1 to 10.

2. The composition of claim 1, wherein said one or more polysulfide soft segments and said one or more polyfluoroether soft segments are collectively present in a concentration from 50 wt% to 95 wt% of said composition.

3. The composition of claim 1, wherein said polysulfide soft segments comprise a polymer selected from the group consisting of poly(ethylene disulfide), poly(ethylene tetrasulfide), poly(ether ether disulfide), poly(ether ether tetrasulfide), poly(ethyl formal disulfide), poly(pentamethylene disulfide), poly(hexamethylene disulfide), poly(butyl formal disulfide), poly(butyl ether disulfide), and combinations thereof.

4. The composition of claim 1, wherein said polysulfide soft segments have an average molecular weight from 500 to 10000.

5. The composition of claim 1, wherein said polysulfide soft segments are α-terminated and/or ω-terminated with sulfur, a sulfur-containing group, a hydroxyl group, or an aliphatic hydroxyl group.

6. The composition of claim 1, wherein said polysulfide soft segments comprise a polymer **characterized by** 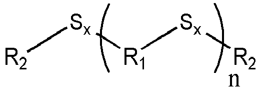 wherein x = 1 to 8, R₁ is an aliphatic group or aliphatic ether group, R₂ = H or an aliphatic hydroxyl group, and n = 1 to 60.

7. The composition of claim 1, wherein said polyfluoroether soft segments comprise a polymer selected from perfluoropolyether, fluorinated polyethers, or a combination thereof.

8. The composition of claim 7, wherein said polyfluoroether soft segments consist of perfluoropolyether.

9. The composition of claim 1, wherein said polyfluoroether soft segments have an average molecular weight from 500 to 5000.

10. The composition of claim 1, wherein said polyfluoroether soft segments are α-terminated and/or ω-terminated with a hydroxyl group or an aliphatic hydroxyl group.

11. The composition of claim 1, wherein said polyfluoroether soft segments are **characterized by** a glass-transition temperature of -85°C or lower.

12. The composition of claim 1, wherein said isocyanate species or derivatives thereof are selected from the group consisting of toluene diisocyanate, hexamethylene diisocyanate, methylenebis(cyclohexyl isocyanate), methylenebis(phenyl isocyanate), isophorone diisocycanate, derivatives thereof, and combinations of any of the foregoing.

13. The composition of claim 1, wherein said curatives are selected from the group consisting of multifunctional alcohols, multifunctional amines, metal oxides, and combinations thereof.

14. The composition of claim 13, wherein said curatives are selected from PbO, MnO₂, ZnO, or combinations thereof.

15. A prepolymer composition comprising one or more polysulfide soft segments, one or more polyfluoroether soft segments, isocyanate species or derivatives thereof contained in each of said segments, and one or more chain-end groups, **characterised in that** the weight ratio of said one or more polysulfide soft segments to said one or more polyfluoroether soft segments is from 0.1 to 10.

16. A segmented copolymer composition comprising one or more polyurethane and/or polyurea hard segments, one or more polysulfide soft segments, one or more polyfluoroether soft segments, isocyanate species or derivatives thereof contained in each of said segments, and one or more curatives,
wherein said segmented copolymer composition is obtained from a prepolymer composition comprising said one or more polysulfide soft segments, said one or more polyfluoroether soft segments, said isocyanate species or derivatives thereof contained in each of said segments, and one or more chain-end groups, **characterised in that** the weight ratio of said one or more polysulfide soft segments to said one or more polyfluoroether soft segments is from 0.1 to 10.

## Patentansprüche

1. Segmentcopolymerzusammensetzung, umfassend ein oder mehrere Polyurethan- und/oder Polyharnstoff-Hartsegmente, ein oder mehrere Polysulfid-Weichsegmente, ein oder mehrere Polyfluorether-Weichsegmente, Isocyanat-Spezies oder Derivate davon, die in jedem der Segmente enthalten sind, und einen oder mehrere Härter, **dadurch gekennzeichnet, dass**:
das Gewichtsverhältnis des einen oder der mehreren Polysulfid-Weichsegmente zu dem einen oder den mehreren Polyfluorether-Weichsegmenten 0,1 bis 10 beträgt.

2. Zusammensetzung nach Anspruch 1, wobei das eine oder die mehreren Polysulfid-Weichsegmente und das eine oder die mehreren Polyfluorether-Weichsegmente zusammen in einer Konzentration von 50 Gew.-% bis 95 Gew.-% der Zusammensetzung vorliegen.

3. Zusammensetzung nach Anspruch 1, wobei die Polysulfid-Weichsegmente ein Polymer aus der Gruppe bestehend aus Poly(ethylendisulfid), Poly-(ethylentetrasulfid), Poly(etheretherdisulfid), Poly(etherethertetrasulfid), Poly(ethylformaldisulfid), Poly(pentamethylendisulfid), Poly(hexamethylendisulfid), Poly(butylformaldisulfid), Poly(butyletherdisulfid) und Kombinationen davon umfassen.

4. Zusammensetzung nach Anspruch 1, wobei die Polysulfid-Weichsegmente ein mittleres Molekulargewicht von 500 bis 10.000 aufweisen.

5. Zusammensetzung nach Anspruch 1, wobei die Polysulfid-Weichsegmente mit Schwefel, einer schwefelhaltigen Gruppe, einer Hydroxylgruppe oder einer aliphatischen Hydroxylgruppe α-terminiert und/oder ω-terminiert sind.

6. Zusammensetzung nach Anspruch 1, wobei die Polysulfid-Weichsegmente ein durch 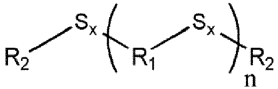 gekennzeichnetes Polymer umfassen, wobei x = 1 bis 8, R₁ für eine aliphatische Gruppe oder aliphatische Ethergruppe steht, R₂ = H oder eine aliphatische Hydroxylgruppe und n = 1-60.

7. Zusammensetzung nach Anspruch 1, wobei die Polyfluorether-Weichsegmente ein Polymer, das aus Perfluorpolyether, fluorierten Polyethern oder einer Kombination davon ausgewählt ist, umfassen.

8. Zusammensetzung nach Anspruch 7, wobei die Polyfluorether-Weichsegmente aus Perfluorpolyether bestehen.

9. Zusammensetzung nach Anspruch 1, wobei die Polyfluorether-Weichsegmente ein mittleres Molekulargewicht von 500 bis 5000 aufweisen.

10. Zusammensetzung nach Anspruch 1, wobei die Polyfluorether-Weichsegmente mit einer Hydroxylgruppe oder einer aliphatischen Hydroxylgruppe α-terminiert und/oder ω-terminiert sind.

11. Zusammensetzung nach Anspruch 1, wobei die Polyfluorether-Weichsegmente durch eine Glasübergangstemperatur von -85 °C oder darunter gekennzeichnet sind.

12. Zusammensetzung nach Anspruch 1, wobei die Isocyanat-Spezies oder Derivate davon aus der Gruppe bestehend aus Toluoldiisocyanat, Hexamethylendiisocyanat, Methylenbis(cyclohexylisocyanat), Methylenbis(phenylisocyanat), Isophorondiisocyanat, Derivaten davon und Kombinationen von beliebigen der oben genannten Substanzen ausgewählt sind.

13. Zusammensetzung nach Anspruch 1, wobei die Härter aus der Gruppe bestehend aus multifunktionellen Alkoholen, multifunktionellen Aminen, Metalloxiden und Kombinationen davon ausgewählt sind.

14. Zusammensetzung nach Anspruch 13, wobei die Härter aus PbO, MnO₂, ZnO und Kombinationen davon ausgewählt sind.

15. Prepolymerzusammensetzung, umfassend ein oder mehrere Polysulfid-Weichsegmente, ein oder mehrere Polyfluorether-Weichsegmente, Isocyanat-Spezies oder Derivate davon, die in jedem der Segmente enthalten sind, und eine oder mehrere Kettenendgruppen, **dadurch gekennzeichnet, dass** das Gewichtsverhältnis des einen oder der mehreren Polysulfid-Weichsegmente zu dem einen oder den mehreren Polyfluorether-Weichsegmenten 0,1 bis 10 beträgt.

16. Segmentcopolymerzusammensetzung, umfassend ein oder mehrere Polyurethan- und/oder Polyharnstoff-Hartsegmente, ein oder mehrere Polysulfid-Weichsegmente, ein oder mehrere Polyfluorether-Weichsegmente, Isocyanat-Spezies oder Derivate davon, die in jedem der Segmente enthalten sind, und einen oder mehrere Härter,
wobei die Segmentcopolymerzusammensetzung aus einer Prepolymerzusammensetzung, umfassend das eine oder die mehreren Polysulfid-Weichsegmente, das eine oder die mehreren Polyfluorether-Weichsegmente, die Isocyanat-Spezies oder Derivate davon, die in jedem der Segmente enthalten sind, und eine oder mehrere Kettenendgruppen, erhalten wird, **dadurch gekennzeichnet, dass** das Gewichtsverhältnis des einen oder der mehreren Polysulfid-Weichsegmente zu dem einen oder den mehreren Polyfluorether-Weichsegmenten 0,1 bis 10 beträgt.

## Revendications

1. Composition de copolymère segmenté comprenant un ou plusieurs segments durs de polyuréthane et/ou de polyurée, un ou plusieurs segments souples de polysulfure, un ou plusieurs segments souples de polyfluoroéther, des espèces d'isocyanate ou des dérivés de celles-ci contenus dans chacun desdits segments, et un ou plusieurs agents de durcissement, **caractérisée en ce que** :
le rapport en poids desdits un ou plusieurs segments souples de polysulfure auxdits un ou plusieurs segments souples de polyfluoroéther est de 0,1 à 10.

2. Composition selon la revendication 1, dans laquelle lesdits un ou plusieurs segments souples de polysulfure et lesdits un ou plusieurs segments souples de polyfluoroéther sont collectivement présents à une concentration de 50 % en poids à 95 % en poids de ladite composition.

3. Composition selon la revendication 1, dans laquelle lesdits segments souples de polysulfure comprennent un polymère choisi dans le groupe constitué de poly(disulfure d'éthylène), poly(tétrasulfure d'éthylène), poly(disulfure d'éther-éther), poly(tétrasulfure d'éther-éther), poly(disulfure d'éthylformal), poly(disulfure de pentaméthylène), poly(disulfure d'hexaméthylène), poly(disulfure de butylformal), poly(disulfure d'éther butylique), et des combinaisons de ceux-ci.

4. Composition selon la revendication 1, dans laquelle lesdits segments souples de polysulfure ont un poids moléculaire moyen de 500 à 10000.

5. Composition selon la revendication 1, dans laquelle lesdits segments souples de polysulfure ont une terminaison α et/ou terminaison ω constituée de soufre, d'un groupe contenant du soufre, d'un groupe hydroxyle, ou d'un groupe hydroxyle aliphatique.

6. Composition selon la revendication 1, dans laquelle lesdits segments souples de polysulfure comprennent un polymère **caractérisé par** 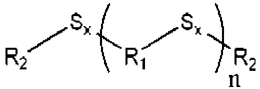 dans lequel x = 1 à 8, R₁ est un groupe aliphatique ou un groupe éther aliphatique, R₂ = H ou un groupe hydroxyle aliphatique, et n = 1 à 60.

7. Composition selon la revendication 1, dans laquelle lesdits segments souples de polyfluoroéther comprennent un polymère choisi parmi un perfluoropolyéther, des polyéthers fluorés, ou une combinaison de ceux-ci.

8. Composition selon la revendication 7, dans laquelle lesdits segments souples de polyfluoroéther sont constitués de perfluoropolyéther.

9. Composition selon la revendication 1, dans laquelle lesdits segments souples de polyfluoroéther ont un poids moléculaire moyen de 500 à 5000.

10. Composition selon la revendication 1, dans laquelle lesdits segments souples de polyfluoroéther ont une terminaison α et/ou une terminaison ω constituée d'un groupe hydroxyle ou d'un groupe hydroxyle aliphatique.

11. Composition selon la revendication 1, dans laquelle lesdits segments souples de polyfluoroéther sont **caractérisés par** une température de transition vitreuse de -85 °C ou moins.

12. Composition selon la revendication 1, dans laquelle lesdites espèces d'isocyanate ou des dérivés de celles-ci sont choisis dans le groupe constitué des diisocyanate de toluène, diisocyanate d'hexaméthylène, diméthylènebis(isocyanate de cyclohexyle), méthylènebis(isocyanate de phényle), diisocycanate d'isophorone, des dérivés des ceux-ci, et des combinaisons de l'un quelconque de ceux-ci.

13. Composition selon la revendication 1, dans laquelle lesdits agents de durcissement sont choisis dans le groupe constitué d'alcools multifonctionnels, amines multifonctionnelles, oxydes métalliques, et des combinaisons de ceux-ci.

14. Composition selon la revendication 13, dans laquelle lesdits agents de durcissement sont choisis parmi PbO, MnO₂, ZnO, ou des combinaisons de ceux-ci.

15. Composition de prépolymère comprenant un ou plusieurs segments souples de polysulfure, un ou plusieurs segments souples de polyfluoroéther, des espèces d'isocyanate ou des dérivés de celles-ci contenus dans chacun desdits segments, et un ou plusieurs groupes d'extrémité de chaîne, **caractérisée en ce que** le rapport en poids desdits un ou plusieurs segments souples de polysulfure auxdits un ou plusieurs segments souples de polyfluoroéther est de 0,1 à 10.

16. Composition de copolymère segmenté comprenant un ou plusieurs segments durs de polyuréthane et/ou de polyurée, un ou plusieurs segments souples de polysulfure, un ou plusieurs segments souples de polyfluoroéther, des espèces d'isocyanate ou des dérivés de celles-ci contenus dans chacun desdits segments, et un ou plusieurs agents de durcissement,
ladite composition de copolymère segmenté étant obtenue à partir d'une composition de prépolymère comprenant lesdits un ou plusieurs segments souples de polysulfure, lesdits un ou plusieurs segments souples de polyfluoroéther, lesdites espèces d'isocyanate ou des dérivés de celles-ci contenus dans chacun desdits segments, et un ou plusieurs groupes d'extrémité de chaîne, **caractérisée en ce que** le rapport en poids desdits un ou plusieurs segments souples de polysulfure auxdits un ou plusieurs segments souples de polyfluoroéther est de 0,1 à 10.
